# EUROPÄISCHE PATENTANMELDUNG

(11) **EP 3 459 961 A1**
(43) Veröffentlichungstag der Anmeldung: **27.03.2019**
(21) Anmeldenummer: 17193151.2
(22) Anmeldetag: 26.09.2017
(51) Int. Cl.: C07F 9/6574, B01J 31/24, C07B 41/06

(54) **VIERZÄHNIGE PHOSPHINO-PHOSPHITE**

(71) Anmelder: Evonik Degussa GmbH, 45128 Essen (DE)
(72) Erfinder: BÖRNER, Armin, 18059 Rostock (DE); FRANKE, Robert, 45772 Marl (DE); SELENT, Detlef, 18059 Rostock (DE)

(57) **Zusammenfassung**

Vierzähnige Phosphino-Phosphite, sowie deren Verwendung als Liganden in der Hydroformylierung.

## Beschreibung

Die Erfindung betrifft vierzähnige Phosphino-Phosphite, sowie deren Verwendung als Liganden in der Hydroformylierung.

Der Erfindung lag die Aufgabe zugrunde Phosphino-Phosphite bereitzustellen, welche als Liganden in der Hydroformylierung eingesetzt werden können. Der Ligand soll eine gute Gesamtausbeute an Aldehyd liefern.

Gelöst wird die Aufgabe durch eine Verbindung gemäß Anspruch 1.

Verbindung der allgemeinen Formel (I): 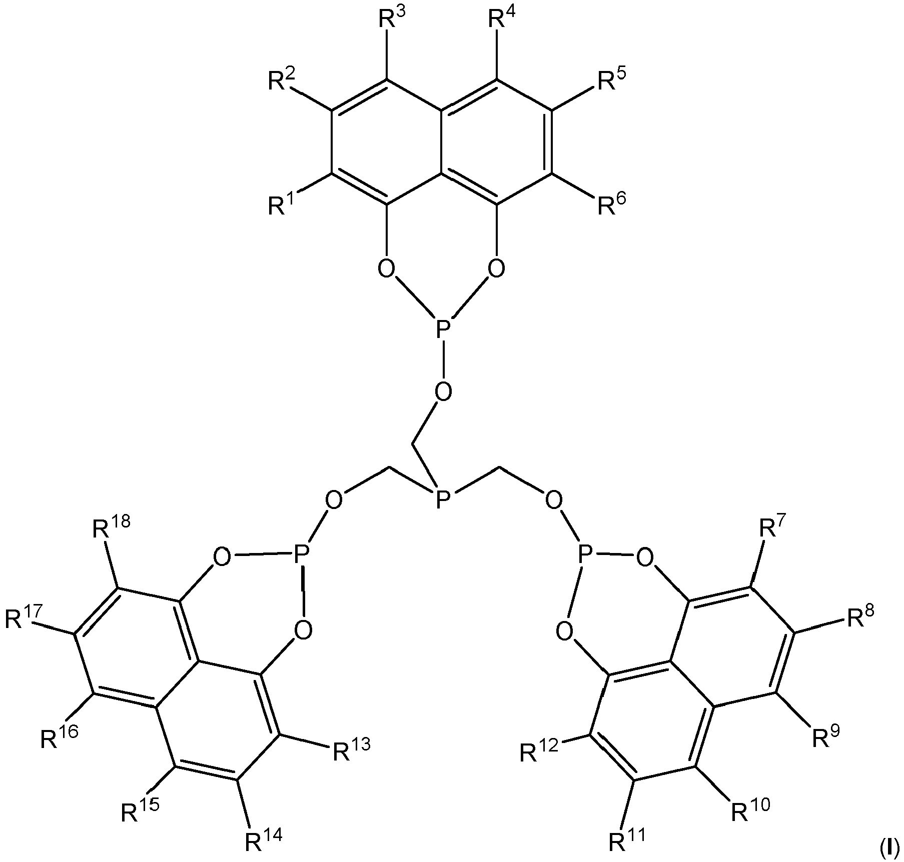
wobei R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸ jeweils unabhängig voneinander ausgewählt sind aus: -H, -(C₁-C₁₂)-Alkyl, -O-(C₁-C₁₂)-Alkyl, -(C₄-C₁₄)-Aryl, -O-(C₄-C₁₄)-Aryl, Cycloalkyl, Halogen,
wobei die genannten Alkylgruppen, Arylgruppen, Cycloalkyl, wie folgt substituiert sein können: -(C₁-C₁₂)-Alkyl, -O-(C₁-C₁₂)-Alkyl.

In einer Ausführungsform sind R¹, R⁶, R⁷, R¹², R¹³, R¹⁸ jeweils unabhängig voneinander ausgewählt aus: -H, -(C₁-C₁₂)-Alkyl,
wobei die genannten Alkylgruppen, wie folgt substituiert sein können:

-(C₁-C₁₂)-Alkyl, -O-(C₁-C₁₂)-Alkyl.

In einer Ausführungsform sind R¹, R⁶, R⁷, R¹², R¹³, R¹⁸ jeweils unabhängig voneinander ausgewählt aus: -H, *-tert*-Bu*.*

In einer Ausführungsform stehen R¹, R⁶, R⁷, R¹², R¹³, R¹⁸ jeweils für den gleichen Rest.

In einer Ausführungsform sind R³, R⁴, R⁹, R¹⁰, R¹⁵, R¹⁶ jeweils unabhängig voneinander ausgewählt aus: -H, -O-(C₁-C₁₂)-Alkyl,
wobei die genannten Alkylgruppen, wie folgt substituiert sein können:

-(C₁-C₁₂)-Alkyl, -O-(C₁-C₁₂)-Alkyl.

In einer Ausführungsform sind R³, R⁴, R⁹, R¹⁰, R¹⁵, R¹⁶ jeweils unabhängig voneinander ausgewählt aus: -H, -O-CH₃.

In einer Ausführungsform stehen R³, R⁴, R⁹, R¹⁰, R¹⁵, R¹⁶ jeweils für den gleichen Rest.

In einer Ausführungsform weist die Verbindung die Struktur (1) auf:

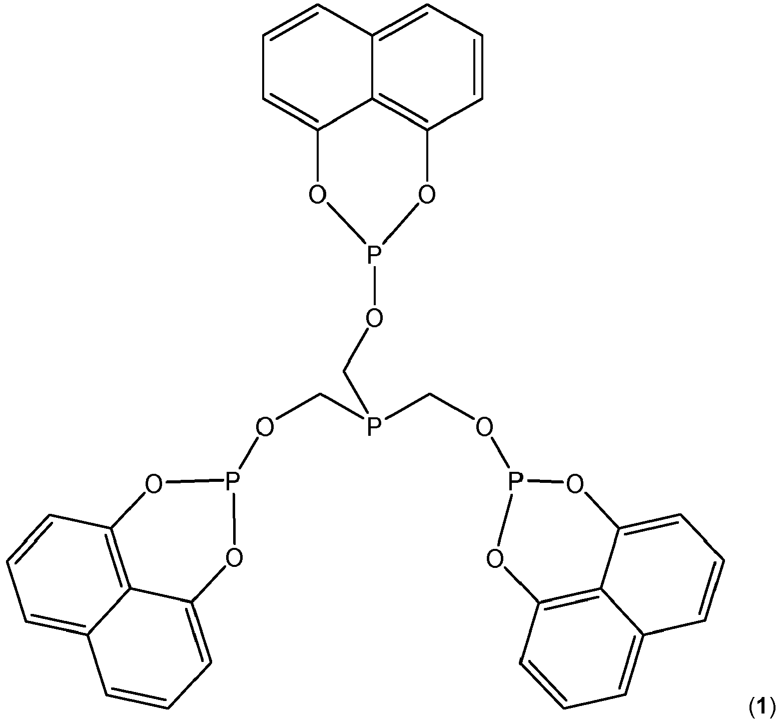

In einer Ausführungsform weist die Verbindung die Struktur (**2**) auf:

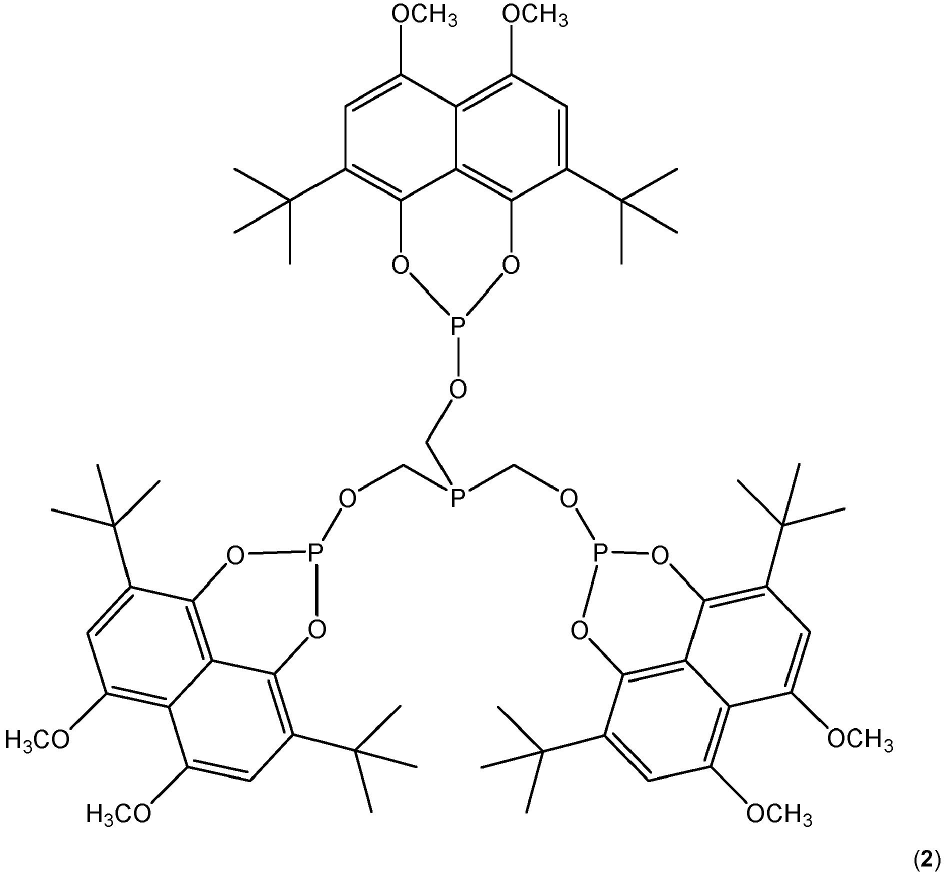

Neben den Verbindungen als Stoff, wird auch deren Verwendung als Ligand beansprucht.

Verwendung einer zuvor beschriebenen Verbindung in einem Ligand-Metall-Komplex zur Katalyse einer Hydroformylierungsreaktion.

Des Weiteren wird auch ein Verfahren beansprucht, in welchem die Verbindungen als Liganden zum Einsatz kommen.

Verfahren umfassend die Verfahrensschritte:
a) Vorlegen eines Olefins,
b) Zugabe eines Komplexes, welcher eine zuvor beschriebene Verbindung umfasst, sowie ein Metall ausgewählt aus: Rh, Ru, Co, Ir,
   oder einer zuvor beschriebenen Verbindung und einer Substanz, welche ein Metall ausgewählt aus: Rh, Ru, Co, Ir aufweist;
c) Zuführen von H₂ und CO,
d) Erwärmen des Reaktionsgemisches, wobei das Olefin zu einem Aldehyd umgesetzt wird.

In einer Variante des Verfahrens ist das Metall Rh.

Im Folgenden wird die Erfindung anhand von Ausführungsbeispielen näher erläutert.

### Ligandensynthese

### Tris((naphtho[1,8-de][1,3,2]dioxaphosphinin-2-yloxy)methyl)phosphan (1)

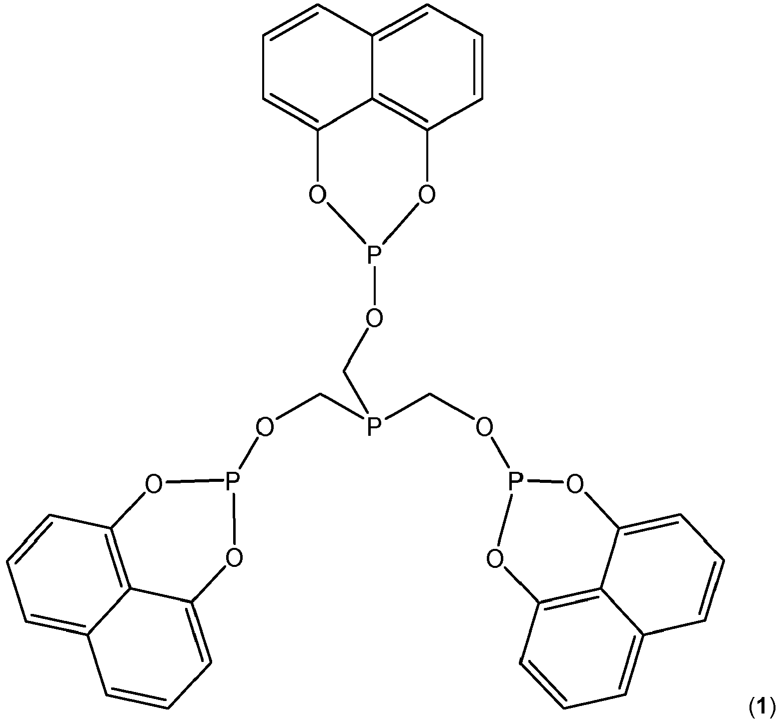

Zu einer Mischung aus Tri(hydroxymethyl)phosphin (0,128 g; 1,030 mmol) und Triethylamin (0,47 ml) in THF (4 ml) wird bei 0 °C eine Lösung von 2-Chlornaphtho[1,8-*de*][1,3,2]dioxaphosphinin (0,694 g; 3,091 mmol) in THF (6 ml) getropft. Man rührt über Nacht, filtriert, engt das Filtrat im Vakuum ein und trocknet den viskosen Rückstand bei 25°C/ 0,1 mbar. Säulenchromatografische Aufarbeitung (Hexan/Dichlormethan = 1,5:1; R*_{f}* = 0,27) ergibt 0,240 g (0,348 mmol; 34%).

Elementaranalyse (ber. für C₃₃H₂₄O₉P₄= 688,44 g/mol): C 57,15 (57,57); H 3,13 (3,51) %. ³¹P-NMR (CD₂Cl₂): -28,5 (q, *J*_{PP}= 7,1 Hz); 112,4 (d, *J*_{PP}= 5,4 Hz) ppm.
¹H-NMR (CD₂Cl₂): 1,41 (s, 54H); 3,82 (s, 18H); 4,18 (virtuelles Triplett, 6H); 6,73 (d, ⁴*J*_{HH} = 3,1 Hz; 6H); 6,98 (d, ⁴*J*_{HH}= 3,1 Hz; 6H) ppm.
¹³C NMR (CD₂Cl₂) δ 57.3 (m); 112,3; 116,8; 122,6; 127,6; 135,2; 144,2 ppm.
EI HRMS: *m*/*z* 688,03601 [M⁺]; ber.: *m*/*z* 688,03653.

### Tris(((4,8-di-tert-butyl-2,10-dimethoxydibenzo[d,f][1,3,2]dioxaphosphepin-6-yl)oxy)methyl)phosphan (2)

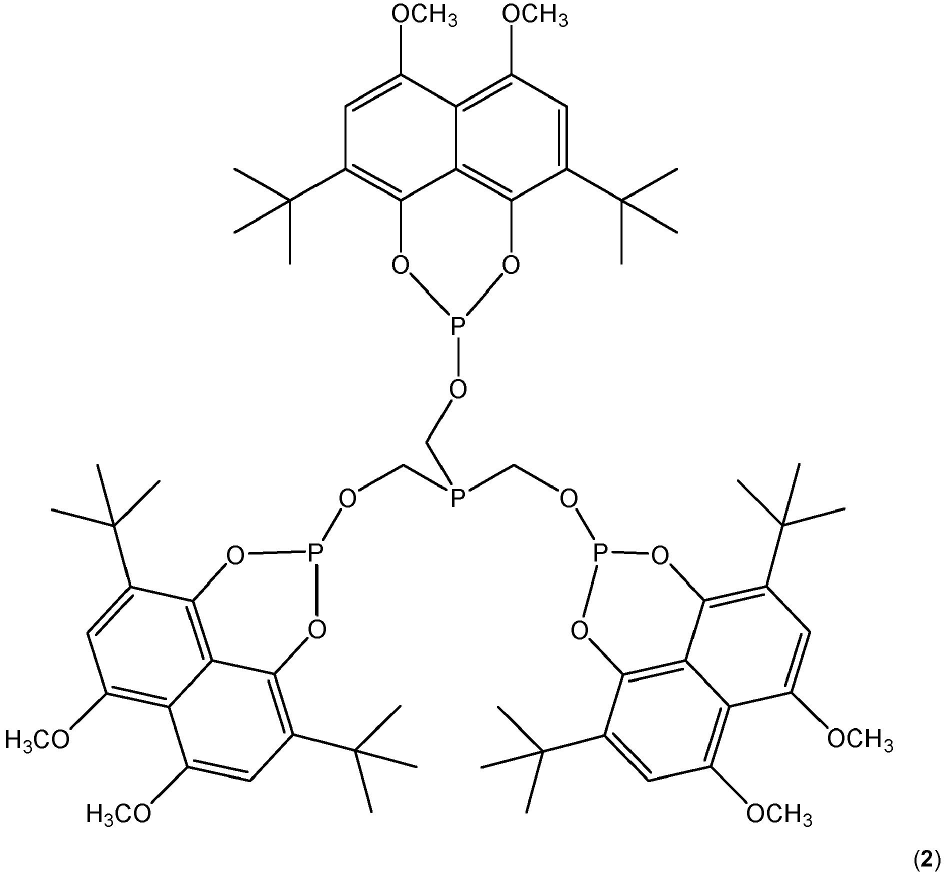

Zu einer Mischung aus Tri(hydroxymethyl)phosphin (0,0594 g; 0,479 mmol) und Triethylamin (0,22 ml) in THF (3 ml) wird bei 0 °C eine Lösung von 4,8-Di-tert-butyl-6-chlor-2,10-dimethoxydibenzo[*d,f*][1,3,2]dioxaphosphepin (0,608 g; 1,437 mmol) in THF (7 ml) getropft. Man rührt über Nacht, filtriert, engt das Filtrat im Vakuum ein und trocknet den viskosen Rückstand bei 25°C/ 0,1 mbar. Säulenchromatografische Aufarbeitung mit Dichlormethan als Elutionsmittel (R*_{f}* = 0,67) ergibt 0,345 g (0,269 mmol; 56%).

Elementaranalyse (ber. für C₆₉H₉₀O₁₅P₄= 1283,35 g/mol): C 64,30 (64,58); H 6,90 (7,07), P 9,46 (9,65) %.
³¹P-NMR (CD₂Cl₂): -28,1 (q, *J*_{PP}= 5,4 Hz); 136,2 (d, *J*_{PP}= 5,4 Hz) ppm.
¹H-NMR (CD₂Cl₂): 1,41 (s, 54H); 3,82 (s, 18H); 4,18 (virtuelles Triplett, 6H); 6,73 (d, ⁴*J*_{HH}= 3,1 Hz; 6H); 6,98 (d, ⁴*J*_{HH}= 3,1 Hz; 6H) ppm.
¹³C NMR (CD₂Cl₂) δ 31,1; 35,6; 58,9 (d, *J*_{CP}= 13,2 Hz); 113,2; 114,7; 133,7; 142,2; 142,7; 156,1 ppm.
ESI-TOF/HRMS: *m*/*z* 1305,5113 [M⁺+Na]; ber.: *m*/*z* 1305,51224.

### Tris(((4,4,5,5-tetraphenyl-1,3,2-dioxaphospholan-2-yl)oxy)methyl)phosphan (3) (Vergleichsligand)

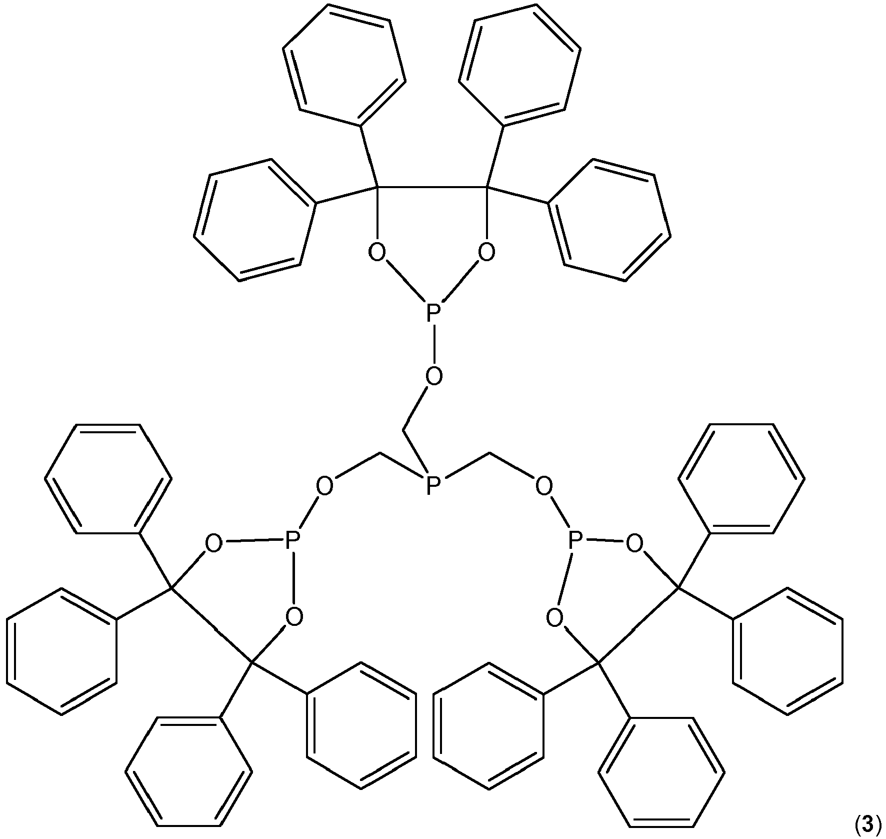

Zu einer Mischung aus Tri(hydroxymethyl)phosphin (0,068 g; 0,551 mmol) und Triethylamin (0,25 ml) in THF (5 ml) wird bei 0 °C eine Lösung von 2-Chlor-4,4,5,5-tetraphenyl-1,3,2-dioxaphospholan (0,713 g; 1,654 mmol) in THF (4 ml) getropft. Man rührt über Nacht, filtriert, engt das Filtrat im Vakuum ein und trocknet den Rückstand bei 30°C/ 0,1 mbar. Ausbeute: 0,700 g (0,535 mmol, 97%).
³¹P-NMR (CD₂Cl₂): -29,4 (q, *J*_{PP}= 8,0 Hz); 150,7 (d, *J*_{PP}= 8,0 Hz) ppm.

### Katalyseversuche

Im Autoklaven wurden unter Argonatmosphäre Lösungen der Katalysatorvorstufe und des Liganden gemischt. Als Katalysatorvorstufe kam [(acac)Rh(COD)] (Umicore, acac = Acetylacetonat-Anion; COD = 1,5-Cyclooctadien) zum Einsatz. Von der Rhodiumverbindung wurden 10 ml in den Autoklaven gegeben. Anschließend wurde die entsprechende Menge an Liganden (Rh/Ligand = 1:1) in 10 ml Toluol gelöst und zugemischt. In eine druckfeste Pipette wurden die 1-Octen eingefüllt. Der Autoklav wurde bei einem Gesamtgasdruck (Synthesegas: Linde; H₂ (99,999%) : CO (99,997%) = 1:1) von 42 bar aufgeheizt. Nach Erreichen der Reaktionstemperatur von 100 °C wurde der Synthesegasdruck auf 48,5 bar erhöht und das Olefin mit einem in der Druckpipette eingestellten Überdruck von ca. 3 bar in den Autoklaven gepresst. Die Reaktion wurde bei konstantem Druck von 50 bar (Nachdruckregler der Fa. Bronkhorst, NL) über 4 h geführt. Der Autoklav wurde nach Ablauf der Reaktionszeit auf Zimmertemperatur abgekühlt, unter Rühren entspannt und mit Argon gespült. Jeweils 1 ml der Reaktionsmischungen wurden unmittelbar nach Abschalten des Rührers entnommen, mit 10 ml Pentan verdünnt und gaschromatographisch analysiert: HP 5890 Series II plus, PONA, 50 m x 0,2 mm x 0,5 µm.

### Ergebnisse der Katalyseversuche

**Tabelle: Hydroformylierung 1-Octen**

| Ligand | Gesamtausbeute Aldehyd (%) |
|---|---|
| **1*** | 88,8 |
| **2*** | 92,0 |
| **3** | 80,7 |

| | |
|---|---|
| * erfindungsgemäße Verbindung | |

Reaktionsbedingungen: 1-Octen, T = 100 °C; p = 50 bar CO/H₂, t = 4h, [Rh] = 0,77 mM, Rh/Olefin = 1:2210. Lösungsmittel: Toluol.

Wie die oben beschriebenen Versuche zeigen, wird die Aufgabe durch eine erfindungsgemäße Verbindung gelöst.

## Patentansprüche

1. Verbindung der allgemeinen Formel (I): 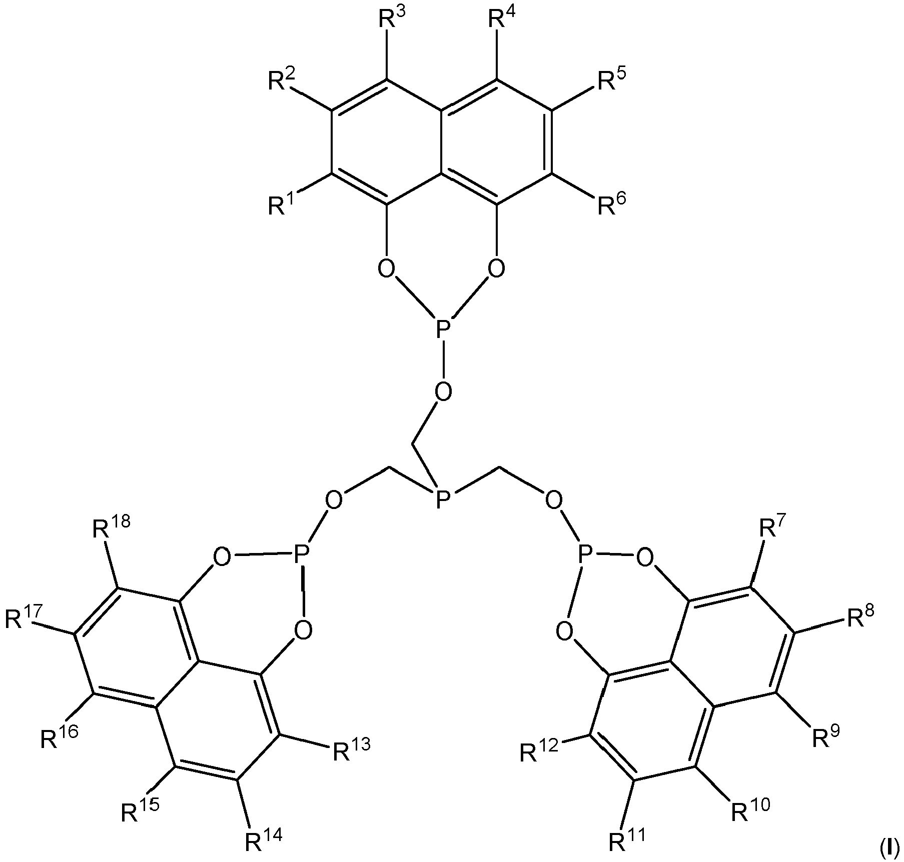
wobei R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸ jeweils unabhängig voneinander ausgewählt sind aus: -H, -(C₁-C₁₂)-Alkyl, -O-(C₁-C₁₂)-Alkyl, -(C₄-C₁₄)-Aryl, -O-(C₄-C₁₄)-Aryl, Cycloalkyl, Halogen,
wobei die genannten Alkylgruppen, Arylgruppen, Cycloalkyl, wie folgt substituiert sein können: -(C₁-C₁₂)-Alkyl, -O-(C₁-C₁₂)-Alkyl.

2. Verbindung nach Anspruch 1,
wobei R¹, R⁶, R⁷, R¹², R¹³, R¹⁸ jeweils unabhängig voneinander ausgewählt sind aus: -H, -(C₁-C₁₂)-Alkyl,
wobei die genannten Alkylgruppen, wie folgt substituiert sein können:
-(C₁-C₁₂)-Alkyl, -O-(C₁-C₁₂)-Alkyl.

3. Verbindung nach einem der Ansprüche 1 oder 2,
wobei R¹, R⁶, R⁷, R¹², R¹³, R¹⁸ jeweils unabhängig voneinander ausgewählt sind aus: -H, *-tert*-Bu*.*

4. Verbindung nach einem der Ansprüche 1 bis 3,
wobei R¹, R⁶, R⁷, R¹², R¹³, R¹⁸ jeweils für den gleichen Rest stehen.

5. Verbindung nach einem der Ansprüche 1 bis 4,
wobei R³, R⁴, R⁹, R¹⁰, R¹⁵, R¹⁶ jeweils unabhängig voneinander ausgewählt sind aus: -H, -O-(C₁-C₁₂)-Alkyl,
wobei die genannten Alkylgruppen, wie folgt substituiert sein können:
-(C₁-C₁₂)-Alkyl, -O-(C₁-C₁₂)-Alkyl.

6. Verbindung nach einem der Ansprüche 1 bis 5,
wobei R³, R⁴, R⁹, R¹⁰, R¹⁵, R¹⁶ jeweils unabhängig voneinander ausgewählt sind aus: -H, -O-CH₃.

7. Verbindung nach einem der Ansprüche 1 bis 6,
wobei R³, R⁴, R⁹, R¹⁰, R¹⁵, R¹⁶ jeweils für den gleichen Rest stehen.

8. Verbindung nach einem der Ansprüche 1 bis 7,
welche die Struktur (1) aufweist:

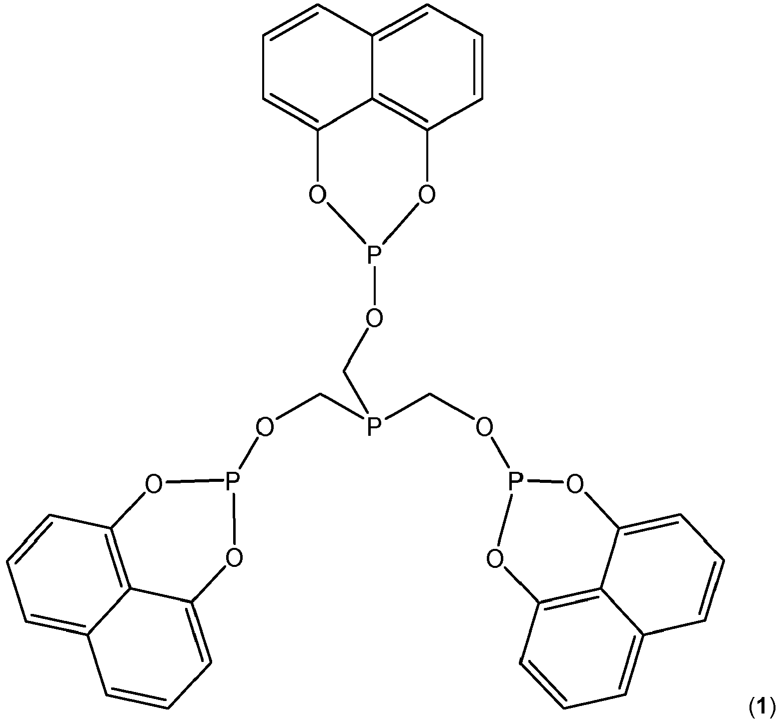

9. Verbindung nach einem der Ansprüche 1 bis 7,
welche die Struktur (**2**) aufweist:

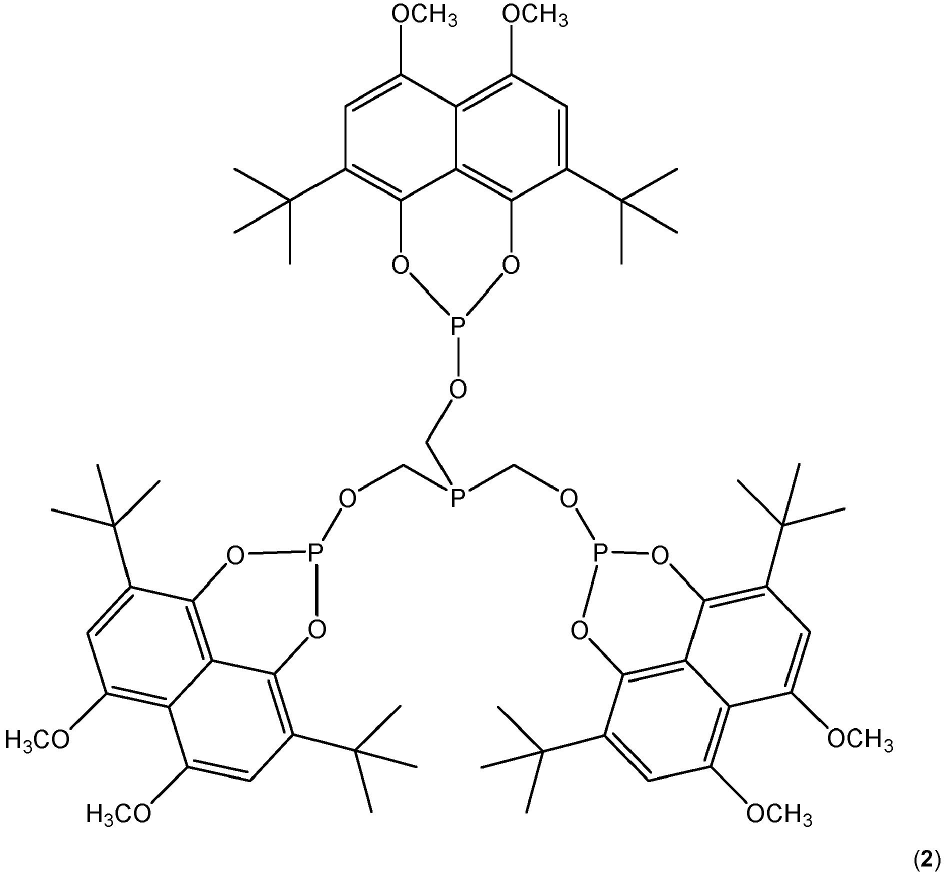

10. Verwendung einer Verbindung nach Anspruch 1 bis 9,
in einem Ligand-Metall-Komplex zur Katalyse einer Hydroformylierungsreaktion.

11. Verfahren umfassend die Verfahrensschritte:
a) Vorlegen eines Olefins,
b) Zugabe eines Komplexes, welcher eine Verbindung gemäß den Ansprüchen 1 bis 9 umfasst, sowie ein Metall ausgewählt aus: Rh, Ru, Co, Ir,
oder einer Verbindung nach einem der Ansprüche 1 bis 9 und einer Substanz, welche ein Metall ausgewählt aus: Rh, Ru, Co, Ir aufweist;
c) Zuführen von H₂ und CO,
d) Erwärmen des Reaktionsgemisches, wobei das Olefin zu einem Aldehyd umgesetzt wird.
